# EUROPÄISCHE PATENTANMELDUNG

(11) **EP 1 321 331 A1**
(43) Veröffentlichungstag der Anmeldung: **25.06.2003**
(21) Anmeldenummer: 02023425.8
(22) Anmeldetag: 19.10.2002
(51) Int. Cl.: B60N 3/10

(54) **Vorrichtung zur Halterung von Behältern insbesondere Getränkebehältern**

(30) Priorität: 04.12.2001 DE 10159461
(71) Anmelder: Preh-Werke GmbH & Co. KG, 97616 Bad Neustadt a.d. Saale (DE)
(72) Erfinder: Then, Gebhard, 97616 Bad Neustadt (DE); Schultheis, Thilo, 97616 Salz (DE)
(74) Vertreter: Dietrich, Barbara

(57) **Zusammenfassung**

Um das motorische Verstellen von Haltearmen (5) einer Vorrichtung (1) zur Halterung von Behältern (2) einfach auslösen zu können, wird vorgeschlagen, die Ansteuerung eines Stellantriebs (13) einmal mit Verstellung zumindest eines Bodenteils (8) des Halters (1) und zum anderen Mal mit Drehung eines Behälters (6) innerhalb des Halters (1) auszulösen. Dies ermöglicht eine eindeutige und bewußte Zuschaltung des Stellantriebes (13) innerhalb des Halters (1).

## Beschreibung

Der stehende Transport von Behältern in Fahrzeugen oder dergleichen wird dadurch erschwert, daß diese den Bewegungsformen des Fahrzeuges während der Fahrt ausgesetzt sind. Insbesondere für Getränkebehältern gilt daher das Bestreben, eine Vorrichtung zur Halterung derartiger, oftmals sogar offener Behälter zu schaffen, die eine einfache Handhabung aufweist und unterschiedliche Behältertypen halten kann.

Aus der DE 199 59 599 A1 ist eine gattungsgemäße Vorrichtung zur Halterung von Getränkebehältern in Kraftfahrzeugen bekannt. Diese Vorrichtung besitzt ein topfähnliches Aufnahmeteil mit Seitenwandung und Bodenwandung. Am Aufnahmeteil sind Haltearme schwenkbar gelagert, die in Taschen der Seitenwandung verschwenkbar sind. Unterhalb der Bodenwandung ist ein Stellantrieb vorgesehen, mittels dessen die Haltearme synchron motorisch verschwenkt werden. Die Ansteuerung des Stellantriebes erfolgt über eine Belegungserkennung, die durch zumindest zwei Sensoren detektiert wird.

Die Aufgabe der vorliegenden Erfindung besteht darin, eine weitere gattungsgemäße Vorrichtung aufzuzeigen.

Gelöst wir die Aufgabe durch die Merkmale des Patentanspruchs 1.

Aus der Überlegung heraus, daß ein Fahrzeug einen Behälter insbesondere während der Fahrt schieben, drücken, heben nicht aber drehen kann, liegt der Erfindung die Idee zugrunde, das Auslösen der motorischen Steuerung für Haltearme eines Halters durch Drücken und durch Drehen bzw. Verdrehen des Behälters vorzunehmen. Dabei wurde eine einfache, in den Halter leicht integrierbare konstruktive Lösung ausgewählt, mittels der das Auslösen der motorischen Steuerung einmal mit Verstellung zumindest eines Bodenteils des Halters zur Auslösung der Haltefunktion und zum anderen Mal mit Drehung eines Behälters innerhalb des Halters zur Auslösung der Funktion "Öffnen" erfolgen kann. Dies ermöglicht zudem eine eindeutige Schaltung eines Stellantriebes innerhalb des Halters. Vorgesehen ist die Nutzung dieser Vorrichtung zum Halten von Getränkebehältern.

Die Vorrichtung bzw. der Halter weist wenigstens eine Öffnung bzw. ein Aufnahmeteil mit verstellbaren Bodenteil auf, in welche ein Behälter, wie Dose, Flasche oder dergleichen gestellt werden kann. Insbesondere durch das Eigengewicht der Behälter wird dann das Bodenteil nach unten bewegt und löst einen Impuls über einen Impulsgeber aus, der vorzugsweise aus einem oder mehreren Schaltern besteht. Der erste betätigte Schalter startet diesen Impuls für einen Motor als Stellantrieb für die Haltearme. Dieser Motor zieht vorzugsweise drei bis vier Halter bzw. Haltearme, die beispielsweise eine nierenförmige Form aufweisen, zentrisch nach innen, so daß diese sich an die Außenwandung des Behälters anlegen und leicht angreifen.

Zur Entnahme des Behälters wird dieser von einer Bedienperson um einen bestimmten vorgegebenen Winkel gedreht. Dadurch wird erneut ein Impuls auslöst (Flip-Flop-Schaltung). Der Motor bewegt sich daraufhin vorzugsweise entgegen der vorherigen Richtung und entspannt beispielsweise eine Haltefeder bis zum Loslassen und bewegt dann die Haltearme nach außen.

in Weiterführung der Erfindung ist an den Spitzen der Haltearme ein Elastomer angeformt, der durch die Haltearme gegen das Behältnis gedrückt wird. Das Elastomer drückt auf den Behälter mit einer variablen Kraft, da der Motor bis zu einer Endstellung weiterfährt. Je größer das hinein gestellte Behältnis ist, desto größer ist die Haltekraft.

Die Elastomerhaftung am Behälter ermöglicht in Weiterführung der Erfindung die einfache Entnahme der Behälters durch Drehen desselben, wodurch die Haltearme mit dem Behälter verdreht werden und der zum Loslassen benötigten Impuls ausgelöst wird. Dies hat den Vorteil, daß vermieden wird, daß sich die Haltearme vorzeitig vom Behältnis lösen.

Der Motor ist auf einer Halteplatte gelagert, in bzw. an der sich auch die drei bis vier Haltearme befinden. Die schwenkbaren Haltearme sind über Hebel mit Zahnsegmenten mit einer Segmentscheibe verbunden, die vom Motor über eine Schnecke und eine Antriebsscheibe verstellbar ist. Die Kraftübertragung zwischen Segmentscheibe und Hebel ist federnd. Je eher die Haltearme am Einsatz anstoßen, um so größer wird die Kraft der Feder, weil der Motor, der bis in seine Endstellung fährt, bewirkt, daß die Verdrehung zwischen Segmentscheibe und Halteplatte vergrößert wird. Der Motor bewegt die Antriebsscheibe mit Hilfe der Schnecke vorzugsweise nur im selben Winkel vor und zurück.

In einer weiteren Variante kann die Verstellung der Haltearme auch über in der Segmentscheibe geführte Hebel erfolgen.

Anhand eines Ausführungsbeispieles mit Zeichnung soll die Erfindung näher erläutert werden.
Es zeigt
- Fig. 1: in einer Draufsicht einen Halter zur Halterung von zwei Getränkebehälter,
- Fig. 2: eine Darstellung des Halters aus Fig. 1 mit Motorantrieb und Zahnsegment,
- Fig. 3: eine Darstellung des Halters aus Fig. 1 mit Hebelverstellung,
- Fig. 4: eine Schnittdarstellung im Schnitt A-A aus Fig. 2.

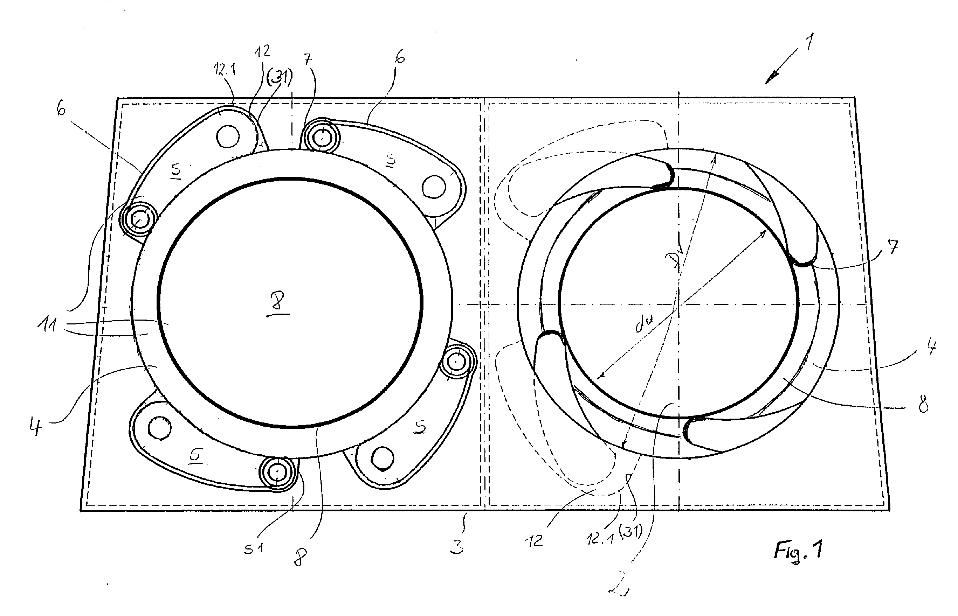

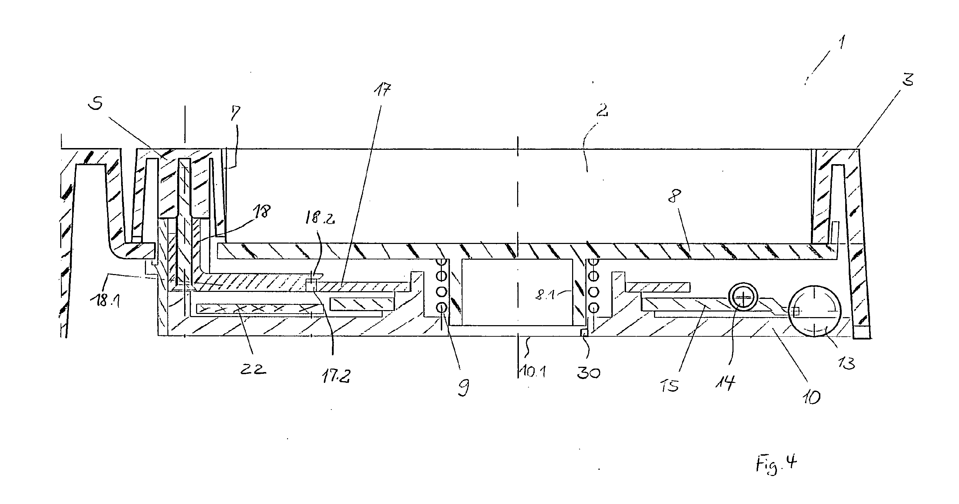

In Fig. 1 ist mit 1 ein Halter 1, bzw. eine Vorrichtung zur Halterung von zwei Getränkebehältern 2 oder dergleichen Gegenständen in Kraftfahrzeugen oder dergleichen angetriebenen oder nicht angetriebenen Fahrzeugen, in einer Draufsicht aufgezeigt.
Die Vorrichtung 1 weist ein Gehäuse 3 mit mindestens einer Öffnung 4 auf. Weiterhin sind, vorzugsweise vier, bewegbar gelagerte Haltearme 5 gleichmäßig umfangsseitig und beispielsweise in Taschen 6 direkt unterhalb dieser Öffnung 4 angeordnet. An den Spitzen 5.1 der Haltearme 5 ist ein Elastomer 7 oder ähnliches Material angeformt. Mit 8 ist ein Bodenteil des Halters 1 gekennzeichnet, welches über eine Druckfeder 9 auf einer Halteplatte 10 gelagert ist (Fig.4). Das Bodenteil 8 bildet mit den Haltearmen 5 und der Öffnung 4 ein sogenanntes Aufnahmeteil 11 für den Getränkebehälter 2. Der Halter 1 weist ein durch die Haltearme 5 mit dem Elastomer 7 im Durchmesser Dᵥ verstellbares Aufnahmeteil 11 auf. Der einstellbare Durchmesser Dᵥ des Aufnahmeteils 9 bestimmt sich aus den unterschiedlichen Durchmesser dᵤ der unterschiedlichen Getränkebehälter 2. Die Variation des einstellbaren Durchmesser Dᵥ kann beispielsweise zwischen 50 bis 90 mm liegen. Die Haltearme 5 sind in die bzw. aus den Freiräumen bzw. Taschen 6 verschwenkbar. Innerhalb der Freiräume 6 ist eine Freisparung 12 vorgesehen, die durch eine Wandung 6.1 der Freiräume 6 begrenzt wird.

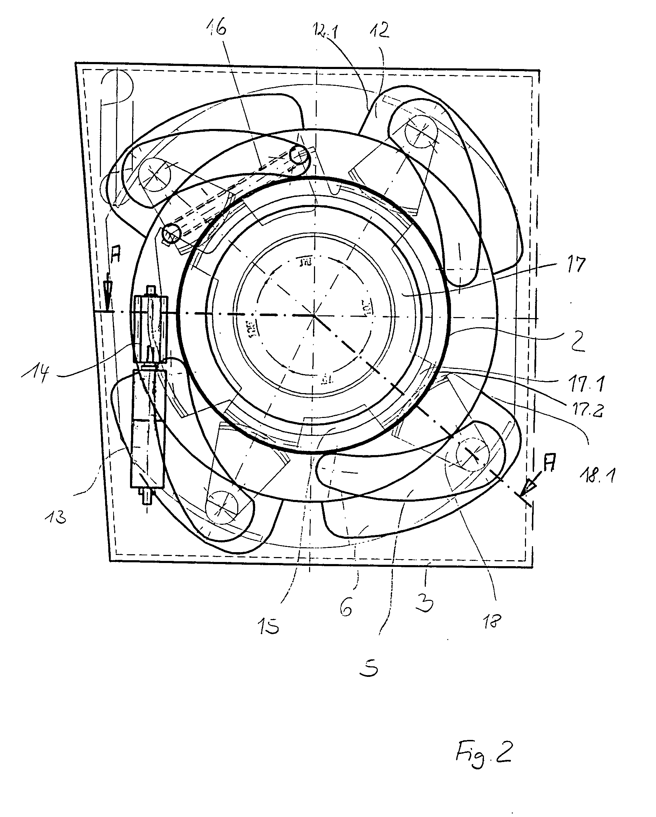

Die Verstellung der Haltearme 5 erfolgt über einen Stellantrieb (Motor) 13, wie in Fig. 2 dargestellt.

Der Motor 13 ist im Gehäuse 3 des Halters 1 vorzugsweise direkt neben dem Bodenteil 8 angeordnet und treibt im funktionalen Gebrauch über eine Schnecke 14 eine Antriebsscheibe 15 unterhalb des Bodenteils 8 an, an der einseitig eine Feder 16 befestigt ist. Die Feder 16 steht mit ihrer anderen Seite mit einer Segmentscheibe 17 in Verbindung. Die Segmentscheibe 17 weist umfangsseitig entsprechend der Anzahl der Haltearme 5 vier Segmentabschnitten 17.1 auf, an denen sich Zähne 17.2 befinden. Mit diesen wirken Zähne 18.1 von Zahnsegmenten 18.1 funktional zusammen, die ihrerseits mit Hebeln 18 zur Verstellung der Haltearmen 5 verbunden sind.

Mit dem Hineinstellen des Getränkebehälters 2 wird die Bodenplatte 8 um ca. 1,5-2 mm mit dem Getränkebehälter 2 nach unten bewegt. Durch diese Bewegung wird durch wenigstens einem von drei, einen Impulsgeber 30 bildenden Schaltern ein Impuls für den Motor 13 ausgelöst. Der Motor 13 läuft an und verstellt dabei die Segmentscheibe 17. Mit Verstellung der Segmentscheibe 17 werden die Zahnsegmente 18.1 und damit die Hebel 18 verdreht, die dabei die Haltearme 5 aus ihrer Ruheposition verschwenken. Die vier Haltearme 5, die im nicht betätigten Zustand beispielsweise unter einem Holzdekor (nicht dargestellt) verborgen sein können, werden über die Hebel 18 nach innen gezogen. Das an den Spitzen 5.1 befindliche Elastomer 7 drückt dabei mit variabler Kraft auf den Getränkebehälter 2 und arretiert diesen dabei. Wenn die Spitzen 5.1 der Haltearme 5 an den Getränkebehälter 2 angreifen, befindet sich die Antriebsscheibe 15 noch im Nachlauf und zieht die Feder 16 straff (längt diese). Diese Kraftverstärkung bewirkt einen festen Halt zwischen dem Getränkebehälter 2 und der Haltearmen 5. Die Feder 16 fungiert hierbei als Kraftverstärker.

Zur Entnahme wird vom Bediener der Getränkebehälter 6 um beispielsweise ca. 5° gedreht. Durch die Elastomerhaftung werden auch die Haltearme 5 mitgedreht. Dabei wird über den Impulsgeber 30 oder einen weiteren Impulsgeber 31 ein Impuls ausgelöst, der den Motor 13 so ansteuert, daß dieser sich vorzugsweise entgegen der vorherigen Drehung bewegt und die Haltearme 5 nach außen zieht. Der Getränkebehälter 2 kann entnommen werden.
Dieser weitere Impulsgeber 31 kann konstruktiv in wenigstens einer der Taschen bzw. Freiräume 6 integriert sein. Mit Verdrehung der Haltearme 5 mit dem Behälter 2 wird dann beispielsweise ein Impuls ausgelöst, wenn wenigstens einer der Haltearme 5 die Wandung 6.1 in einer der Taschen 6 berührt.

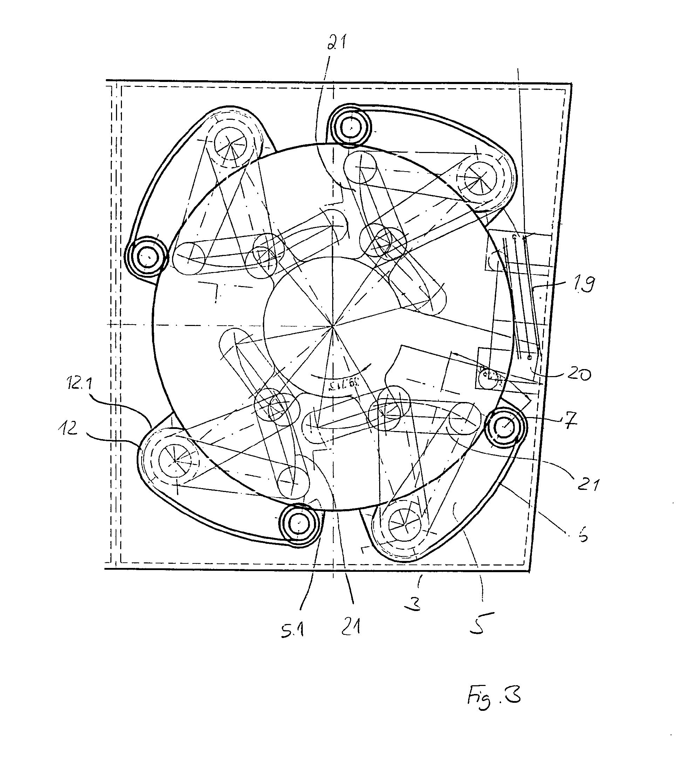

Fig. 3 zeigt eine weitere Lösung, wobei hier die Verstellbewegung über Gelenke 21 erfolgt. Hierbei wird ein Schnecke 19 vom nicht näher dargestellten Motor bewegt, die mit einer Antriebsscheibe 20 funktional verbunden ist. Über die Gelenke 21, die vorzugsweise von unten an die Haltearme 5 greifen, werden die Haltearmen 5 zentrische gezogen bzw. zurückgeführt, wenn die Antriebsscheibe 20 bewegt wird.

Fig. 4 zeigt den Halter 1 im Schnitt A-A aus Fig. 2 zur besseren Darstellung der unterhalb des Bodenteils 8 befindlichen Teile. Auf der Halteplatte 10 sind der Motor 13 fest sowie die Antriebsscheibe 15 und die Segmentscheibe 17 beweglich gelagert. Auf gleicher Ebene mit der Segmentscheibe 17 sind die Zahnsegmente 18.1 angebracht, die von den Hebeln 18 gehalten werden, welche sich an der Halteplatte 10 abstützen. Auf den Hebeln 8 sind die Haltearme 5 befestigt. Ebenfalls auf der Halteplatte 10 befindet sich eine Leiterplatte 22, welche die notwendigen elektronischen Bauelemente, beispielsweise auch die der Motorelektronik, trägt. Das Bodenteil 8 weist mittig einen Ansatz 8.1auf, der von der Druckfeder 9 umfaßt wird, durch die die Bodenplatte 8 ohne Gewichtseinwirkung gegen das Gehäuse 3 drückt. Zum Eintauchen des Ansatzes 8.1 der Bodenplatte 8 beim funktionalen Gebrauch weist die Halteplatte 10 einen Durchbruch 10.1 auf.

## Patentansprüche

1. Vorrichtung (1) zur Halterung von Behältern (2) oder dergleichen Gegenständen in Kraftfahrzeugen oder dergleichen angetriebenen oder nicht angetriebenen Fahrzeugen, aufweisen
- wenigstens eine Öffnung (4) und ein Bodenteil (8) sowie Haltearme (5),
- die schwenkbeweglich gelagert sind und in eine Freigabelage und in eine Halteposition für den Behälter (2) verschwenkbar sind,
- wobei ein Impulsgeber (30) einen ersten Impuls für einen Stellantrieb (13) für die Haltearme (5) auslöst, wenn beim Aufsetzen des Behälters (2) auf das Bodenteil (8) zumindest das Bodenteil (8) nach unten bewegt wird und die Haltearme (5) in die Halteposition gebracht werden, und
- ein weiterer Impuls beim Verdrehen des Behälters (2) zur Entnahme des selbigen ausgelöst wird, wodurch die Haltearme (5) in die Freigabelage geführt werden.

2. Vorrichtung nach Anspruch 1, **dadurch gekennzeichnet, daß** die Haltearme (5) in Freiräumen (6) gehalten werden.

3. Vorrichtung nach Anspruch 2, **dadurch gekennzeichnet, daß** die Freiräume (6) jeweils eine Freisparungen (12) besitzen, die von einer Wandung (6.1) des Freiraumes (6) begrenzt werden.

4. Vorrichtung nach einem der Ansprüche 1 bis 3, **dadurch gekennzeichnet, daß** mit Verdrehen des Behälters (2) die Haltearme (5) mit verdreht werden.

5. Vorrichtung nach einem der Ansprüche 1 bis 4, **dadurch gekennzeichnet, daß** die Verdrehung um einen vorgegebenen Winkel erfolgt.

6. Vorrichtung nach einem der Ansprüche 1 bis 5, **dadurch gekennzeichnet, daß** der weitere Impuls beim Verdrehen des Behälters (2) durch den ersten Impulsgeber (30) erzeugt wird.

7. Vorrichtung nach einem der Ansprüche 1 bis 5, **dadurch gekennzeichnet, daß** der weitere Impuls beim Verdrehen des Behälters (2) durch Anschlag wenigstens einer der Haltearme (5) an die Wandung (6.1) des Freiraumes (6) erzeugt wird.

8. Vorrichtung nach einem der Ansprüche 1 bis 7, **dadurch gekennzeichnet, daß** zumindest das Bodenteil (8) um 1,5 bis 2 mm nach unten bewegbar ist.

9. Vorrichtung nach einem der Ansprüche 1 bis 8 , **dadurch gekennzeichnet, daß** an den Spitzen (5.1) der Haltearme (5) ein elastomeres Material (7) angeformt ist.

10. Vorrichtung nach einem der Ansprüche 1 bis 9, **dadurch gekennzeichnet, daß** der Stellantrieb (13) die Haltearme (5) über eine Schnecke (14), eine Antriebsscheibe (15) und eine Segmentscheibe (17) sowie Zahnsegmenten (18.1) und damit verbundenen Hebeln (18) verschwenkt, wobei zwischen der Antriebsscheibe (15) und der Segmentscheibe (17) eine Feder (16) eingebunden ist.

11. Vorrichtung nach einem der Ansprüche 1 bis 9, **dadurch gekennzeichnet, daß** der Stellantrieb (13) die Haltearme (5) über Gelenke (21) bewegt, wobei diese mit einer Antriebsscheibe (20) funktional verbunden sind, welche von einer Schnecke (19) angetrieben wird, die vom Stellantrieb (13) bewegt wird.

12. Vorrichtung nach einem der vorgenannten Ansprüche, **dadurch gekennzeichnet, daß** der Stellantrieb (13) um Öffnen der Haltearme (4) entgegen einer Richtung zur Einnahme der Halteposition bewegt wird.
